(19) Europäisches Patentamt
European Patent Office
Office européen des brevets

(11) **EP 1 562 445 B1**

(12) **EUROPEAN PATENT SPECIFICATION**

(45) Date of publication and mention
of the grant of the patent:
**06.10.2010 Bulletin 2010/40**

(21) Application number: **03786938.5**

(22) Date of filing: **20.11.2003**

(51) Int Cl.:
*A23L 1/015* (2006.01)    *A23L 1/217* (2006.01)

(86) International application number:
**PCT/US2003/037216**

(87) International publication number:
**WO 2004/047560 (10.06.2004 Gazette 2004/24)**

(54) **METHOD FOR REDUCING ACRYLAMIDE IN FOODS, AND FOODS HAVING REDUCED LEVELS OF ACRYLAMIDE**

VERFAHREN ZUR SENKUNG DES ACRYLAMIDGEHALTS VON LEBENSMITTELN, LEBENSMITTEL MIT NIEDRIGEM ACRYLAMIDGEHALT

PROCEDE SERVANT A DIMINUER LE NIVEAU D'ACRYLAMIDE DANS DES PRODUITS ALIMENTAIRES ET PRODUITS ALIMENTAIRES PRESENTANT DES NIVEAUX LIMITES D'ACRYLAMIDE

(84) Designated Contracting States:
**AT BE BG CH CY CZ DE DK EE ES FI FR GB GR HU IE IT LI LU MC NL PT RO SE SI SK TR**

(30) Priority: **22.11.2002 US 428365 P**
**25.06.2003 US 606260**

(43) Date of publication of application:
**17.08.2005 Bulletin 2005/33**

(73) Proprietor: **THE PROCTER & GAMBLE COMPANY**
Cincinnati, OH 45202 (US)

(72) Inventors:
• **ZYZAK, David, Vincent**
**Mason, OH 45040 (US)**
• **LIN, Peter, Yau Tak**
**Liberty Township, OH 45044 (US)**
• **SANDERS, Robert, Alan**
**Fairfield, OH 45014 (US)**
• **STOJANOVIC, Marko**
**Cincinnati, OH 45242 (US)**
• **GRUBER, David, Cammiade**
**Cincinnati, OH 45213 (US)**
• **VILLAGRAN, Maria, Dolores, Martinez-Serna**
**Mason, OH 45040 (US)**
• **HOWIE, John, Keeney**
**Oregonia, OH 45054 (US)**
• **SCHAFERMEYER, Richard, Gerald**
**Cincinnati, OH 45231 (US)**

(74) Representative: **Kellenberger, Jakob et al**
**NV Procter & Gamble**
**Services Company S.A.**
**Intellectual Property Department**
**Temselaan 100**
**1853 Strombeek-Bever (BE)**

(56) References cited:
**WO-A-2004/026043    GB-A- 807 689**

• TAREKE E ET AL: "analysis of acrylamide, a carcinogen formed in heated foddstuffs" JOURNAL OF AGRICULTURAL AND FOOD CHEMISTRY, AMERICAN CHEMICAL SOCIETY. WASHINGTON, US, vol. 50, 17 July 2002 (2002-07-17), pages 4998-5006, XP002237517 ISSN: 0021-8561
• "Brief Communications, ACRYLAMIDE IS FORMED IN THE MAILLARD REACTION" NATURE, MACMILLAN JOURNALS LTD. LONDON, GB, vol. 419, 3 October 2002 (2002-10-03), pages 448-449, XP002235161 ISSN: 0028-0836
• BIEKMAN E S A: "TOEPASSING VAN ENZYMEN BIJ DE VERWERKING VAN AARDAPPELEN TOT CONSUMPTIEPRODUKTEN" VOEDINGSMIDDELEN TECHNOLOGIE, NOORDERVLIET B.V. ZEIST, NL, vol. 22, no. 20, 12 October 1989 (1989-10-12), pages 51-53, XP000069625 ISSN: 0042-7934

Description

## FIELD OF INVENTION

The present invention relates to the reduction of acrylamide in food products and to food products having reduced levels of acrylamide. The invention further relates to an article of commerce.

## BACKGROUND OF THE INVENTION

Since the dawn of civilization, carbohydrate-containing foods have been a staple in man's diet. Today, carbohydrate-containing foods such as breads, breakfast cereals, biscuits, crackers, cookies, French fries, cooked starchy vegetables, taco shells, and snack foods are popularly consumed. Although such foods have been part of the human diet for countless years, researchers have only recently discovered that many of these foods contain acrylamide.

In April 2002, the Swedish National Food Administration and researchers from Stockholm University announced their findings that acrylamide, a potentially cancer-causing chemical, is formed in many types of cooked foods. Acrylamide has a carcinogenic potency in rats that is similar to that of other carcinogens in food, but for humans, the relative potency in food is not known. Only limited human population data are available for acrylamide and these provide no evidence of cancer risk from occupational exposure. (FAO/WHO Consultation on the Health Implications of Acrylamide in Food: Summary Report; Geneva, Switzerland, 25-27 June 2002.)

Although further research is needed to assess what health effects, if any, may result from human consumption of acrylamide at the levels commonly found in such foods, many consumers have voiced concern. Accordingly, it is an object of the present invention to provide a method for reducing the level of acrylamide in food products. It is also an object of the present invention to provide food products having reduced levels of acrylamide. Further, it is an object of the present invention to provide an article of commerce that communicates to the consumer that a food product has reduced or low levels of acrylamide.

6B-A-807689 discloses a process for recovering asparagine from potatoes starch waste water.

## SUMMARY OF THE INVENTION

In one aspect, the present invention provides a method for reducing the level of acrylamide in a food product. In one embodiment, the method comprises reducing the level of asparagine in a food material before heating.

In another aspect, the present invention provides a method for reducing the level of asparagine in a food material. In one embodiment, the method comprises extracting at least a portion of the asparagine from the food material before heating.

In another aspect, the present invention provides a food product having a reduced level of acrylamide.

In still another aspect, the present invention provides a food material having a reduced level of asparagine.

In yet another aspect, the present invention provides an article of commerce that communicates to the consumer that a food product has reduced or low levels of acrylamide or of asparagine.

## BRIEF DESCRIPTION OF THE DRAWINGS

Figure 1. Figure 1 sets forth the proposed reaction mechanism by which acrylamide forms from asparagine and a carbonyl source (such as glucose). $R_1$ and $R_2$ can = H, $CH_3$, $CH_2OH$, $CH_2(CH_2)_nCH_3$, or any other component making up a reducing sugar; n can be any integer less than 10.

Figure 2. Figure 2 sets forth the proposed reaction mechanism by which asparaginase reacts with asparagine to prevent the formation of acrylamide.

Figure 3. Figure 3 sets forth a sample chromatogram for LC analysis of asparagine and aspartic acid. The x-axis represents retention time and the y-axis represents response.

## DETAILED DESCRIPTION OF THE INVENTION

Applicants have discovered that asparagine, a naturally occurring amino acid found in virtually all living systems, can form acrylamide when heated. Thus, foods richer in asparagine, when heated, tend to contain higher levels of acrylamide; this is especially the case when asparagine-containing foods are heated in the presence of reducing sugars. Formation of acrylamide has also been found to be higher when foods are cooked to a lower final moisture content.

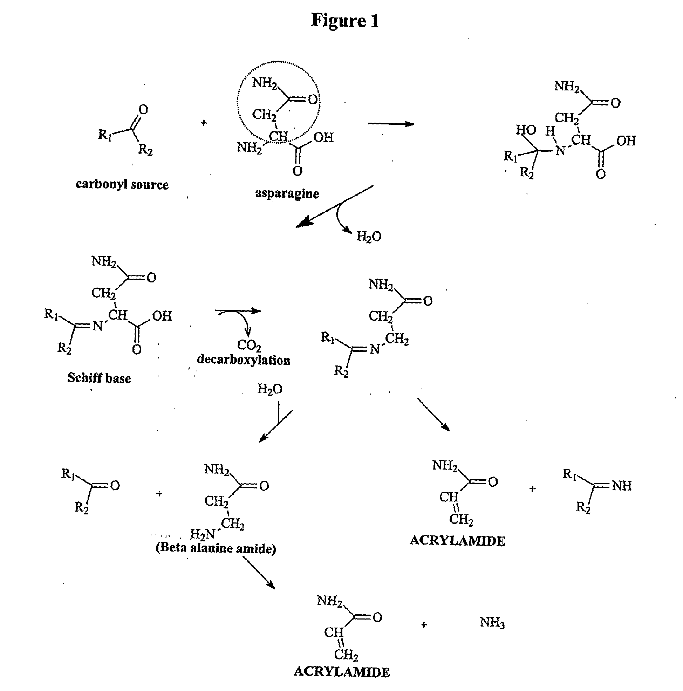

While not being limited by theory, it is believed that acrylamide forms in food products via the reaction mechanism set forth in Figure 1. It is believed that the alpha-amine group of free asparagine reacts with a carbonyl source, forming a Schiff base. Under heat, the Schiff base adduct decarboxylates, forming a product that can either: (1) hydrolyze to form beta-alanine amide (which can, under heat, further degrade to form acrylamide) or (2) decompose to form acrylamide and the corresponding imine. (Applicants have discovered that the circled precursor atoms comprise the carbons and nitrogens in acrylamide.)

Accordingly, Applicants have further discovered that acrylamide formation in heated foods can be reduced by removing at least a portion of the asparagine before cooking. When such foods containing reduced levels of asparagine are heated, the amount of acrylamide formed is reduced. Extraction with a solvent is a preferred method of asparagine removal. A preferred solvent is water.

A. Method for Reduction of Acrylamide in Food Products

In one aspect, the present invention provides a method for the reduction of acrylamide in a food product comprising reducing the level of asparagine in a food material before final heating (e.g., cooking). In one embodiment, the method comprises extracting at least a portion of the asparagine from a food material before final heating. In a preferred embodiment, the method for reducing the level of acrylamide in a food product comprises:

　　(1) providing a food material, wherein said food material comprises asparagine;
　　(2) reducing the particle size of the food material;
　　(3) optionally increasing the cellular membrane permeability of the food material;
　　(4) removing at least a portion of the asparagine from the food material; and
　　(5) heating the food material to form the finished food product.

In another aspect, the present invention provides a method for the reduction of asparagine in a food material. In one embodiment, the method comprises extracting at least a portion of the asparagine from a food material. In one embodiment, extracting comprises blanching the food material in a solvent. A preferred solvent is water. In a preferred embodiment, the method for reducing the level of asparagine in a food product comprises:

　　(1) providing a food material, wherein said food material comprises asparagine;
　　(2) reducing the particle size of the food material;
　　(3) optionally increasing the cellular membrane permeability of the food material; and
　　(4) extracting the asparagine from the food material.

1. Providing a food material wherein said food material comprises asparagine

As used herein, "food material" includes any type of asparagine-containing edible material used in the preparation of food, including mixtures of two or more foods.

2. Reducing the particle size of the food material

The particle size of the food material is reduced, especially when asparagine removal comprises extraction. The extraction process is believed to be a diffusion-controlled phenomenon, thus decreasing diffusion distance can increase extraction efficiency. Reducing the particle size of the food material reduces the diffusion distance, thus increasing extraction efficiency. Particle size reduction can be accomplished by any suitable means, including cutting, chopping, macerating, comminuting, grinding, shredding, extruding, mashing, or a combination thereof.

3. Optionally increasing the cellular membrane permeability of the food material

Keeping important components within the living cell is very important to cell viability. Many cells use active transport to maintain concentrations of important components within the cell at a higher level than that permitted by osmosis. Because of this principal, it can be difficult to extract certain components from cells. While not being limited by theory, it is believed that asparagine is located in the cellular structure of food materials; this can make the asparagine not readily available for extraction. Applicants have found that by altering the cellular membrane structure to enhance permeability, the extraction efficiency of asparagine can be greatly enhanced.

Food material cell membranes can be altered to increase asparagine extraction by any suitable means including, but not limited to, heating (e.g., convective, radiant, microwave, infrared), osmotic pressure alteration, altering the pH of the cell's environment, treatment with one or more enzymes (e.g., cellulose-degrading enzymes such as cellulase, hemicellulase, pectinase, or mixtures thereof), freeze-thaw cycles, other means of cellular membrane disruption (e.g.,

ultrasonication), or combinations thereof.

In a preferred embodiment, blanching is used to alter the cell membrane. During blanching, cell permeability can be affected in various ways. For example, the cell contents can be enlarged (e.g., due to starch gelatinization), causing the cell membrane to rupture. Furthermore, the heat can denature the cellular membrane proteins, resulting in cellular leakage. This can result in increased extraction efficiency of asparagine.

4. <u>Removing at least a portion of the asparagine from the food material</u>

At least a portion of the asparagine is removed from the food material. Preferably, the level of asparagine in the food material is reduced by at least about 10%, preferably at least about 30%, more preferably at least about 50%, still more preferably at least about 70%, and even more preferably at least about 90%.

Any suitable means for removing asparagine can be used. A preferred method of removing asparagine comprises extraction. As used herein, extraction includes any means of contacting the food material with solvent such that at least a portion of the asparagine is removed. Any solvent in which asparagine is soluble can be used for extraction (e.g., any asparagine-soluble food grade solvents, acids, or alkalies), however the preferred solvent is water. There are several reasons why water is an ideal solvent for asparagine extraction: (1) asparagine is very soluble in water; (2) water is very inexpensive; and (3) water is generally recognized as safe.

Any suitable extraction method can be used. For example, extraction can comprise methods such as soaking, leaching, washing, rinsing, dominant bath, or combinations thereof.

Preferably, the extraction process is carried out at a temperature at which the solvent is a liquid and at which the physical properties of the food material (e.g., those important in affecting the final food product) will not be adversely affected. When water is used as the solvent, the lower temperature limit is typically about 0°C; however, the lower limit can be below 0°C if a salt or co-solvent (or some other means of achieving freezing-point depression) is used to suppress the freezing point. The upper temperature limit is typically below the denaturization temperature of protein, for example less than about 170°F (77°C). In one embodiment, the extraction temperature is from about 5°C to about 70°C, preferably from about 10°C to about 60°C.

Not only asparagine, but also various other solvent-soluble (e.g., water-soluble) components, can be removed during extraction. Because many of these solvent-soluble components can include flavor compounds, extraction can have a negative impact on the flavor of the finished food product. Applicants have found that using a dominant bath extraction process can minimize the removal of other solvent-soluble components, including flavor compounds, from the food material.

Dominant Bath Extraction Process

A dominant bath can be used to selectively extract one or more components from a food material without adversely affecting the concentration of other components. A dominant bath is established by successively extracting batches of food material with a bath containing a solvent to establish, or to approach, an equilibrium of one or more extractible components from the food material by the solvent. The component or components are selectively isolated or removed from the solvent by any suitable means. The remaining soluble components establish or approach equilibrium with the food material. Successively, another batch or batches of food material are processed with the established bath. This results in the selective removal of the component or components without adversely affecting the concentration of the other components. Additional solvent can be added to maintain a constant volume of the bath after each batch of food material is processed.

Once the dominant bath is established, successive batches of food material can be extracted in a batch, semi-batch, or continuous mode (e.g., a counter-current continuous process wherein the food is pumped in one direction and the solvent is pumped in the opposite direction).

In the present invention, a dominant bath can be used to selectively remove asparagine from food materials. The dominant bath approach can be practiced in various modes to remove the asparagine from the solvent. For example, these modes can include adding an asparagine-altering enzyme to the solvent in the dominant bath, pumping solvent through an immobilized asparagine-altering enzyme column, or pumping solvent through a column containing an adsorbent that is selective for asparagine (e.g., contains a receptor site specific for asparagine).

In one embodiment, an asparagine-altering enzyme is added to the dominant bath to selectively remove asparagine. As used herein, "asparagine-altering enzyme" or "enzyme" includes any enzyme capable of altering the chemical structure of asparagine. For example, deamidases that have asparagine-altering functionality are included in the terms. As used herein, the terms "asparagine-altering enzyme" and "enzyme" include one or more enzymes; for example, a mixture of two or more enzymes is encompassed by the terms.

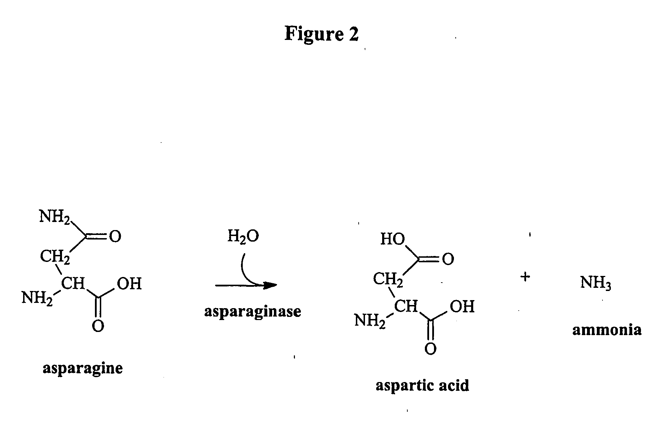

In a preferred embodiment, the asparagine-altering enzyme is an enzyme capable of hydrolyzing the amide group of free asparagine. A preferred enzyme for use herein is asparaginase. A preferred source of asparaginase is Sigma-Aldrich, catalog #A2925. While not being limited by theory, it is believed that the addition of such an enzyme degrades the side chain of asparagine; in doing so, the amide bond is hydrolyzed and asparagine is converted to aspartic acid. This reaction mechanism is set forth in Figure 2.

When the enzyme in the dominant bath converts asparagine to aspartic acid, this creates a driving force for additional asparagine extraction on subsequent additions of batches of food material. Extractable materials equilibrate with the food material such that additional soluble food material components do not extract out, except for asparagine, which continues to react and be converted by the enzyme. The aspartic acid that is formed from the asparagine soaks back into the food material and equilibrates. Additional solvent and/or enzyme-containing solution is added back after every batch of food material to make up for the solution that is removed by the previous batch of food material; this maintains a constant volume of the dominant bath.

Enzymes are marketed by units of activity, rather than by weight or volume. Thus, the effective amount of enzyme required to achieve the desired level of acrylamide reduction in the finished food product will depend upon the activity of the particular enzyme product used.

The amount of enzyme to add can depend upon the level of asparagine reduction, and accordingly the level of acrylamide reduction, that is desired. The amount of enzyme to add can also depend upon the amount of asparagine present in the food material; food materials higher in asparagine will generally require increased levels of enzyme or increased reaction time to achieve the same level of acrylamide reduction. The amount of enzyme to add can also depend upon the particular enzyme used (for example, the particular enzyme's ability to degrade asparagine) and the particular food material treated. One skilled in the art will be able to determine the effective amount of enzyme based upon the specific food material, the specific enzyme, the enzyme's specific activity, and the desired result.

After the enzyme has reacted to the desired extent, it can optionally be deactivated or removed from the food material. When an enzyme that is safe for consumption (e.g., naturally occurring and found in common foods) is used, one may choose not to deactivate or remove the enzyme. Alternatively, the enzyme can be deactivated by any suitable means that inactivates the enzyme. For example, the enzyme can be deactivated through the use of heat, pH adjustment, treatment with a protease, or combinations thereof. Furthermore, the enzyme can be removed from the food material by any suitable means including, but not limited to, extraction. The enzyme can be deactivated, removed, or subjected to a combination of deactivation and removal.

In another embodiment, the asparagine-altering enzyme is not added directly to the dominant bath. Rather, the extract in the bath is pumped through a bed or column of immobilized asparagine-altering enzyme (the enzyme is either adsorbed or chemically bonded to a substrate, preferably an inert substrate, e.g., pieces of plastic or beads in a column or to the walls of hollow membrane tubing). The main advantage of this approach is that free enzyme is not in direct contact with the food material, which may remove a portion of the enzyme from the dominant bath thus necessitating enzyme replenishment. Immobilizing the enzyme may reduce or eliminate the expense associated with the replenishment of an expensive enzyme. This embodiment also has the advantage of minimizing the removal of other solvent-soluble components from the food material.

In another embodiment, a stream of solvent from the established dominant bath is directed to a column that contains hollow fiber membranes (such as those disclosed in U.S. Patent No. 5,869,297), dialysis material, or size exclusion material (e.g. zeolites) that allow asparagine molecules and other molecules of equal or smaller size to be diffused out of the stream. The net effect is selective removal of asparagine from the food material, leading to the desired acrylamide reduction without adversely reducing finished food product flavor display.

In yet another embodiment, a stream of extract is directed to a column that contains adsorbents that selectively adsorb asparagine. Suitable adsorbents can include, but are not limited to, molecular sieves, zeolites, cyclodextrins, clays, diatomaceous earths, silicas (e.g., magnesium silicates such as Florisil®), ion exchange resins (anion or cation or mixed resins, such as Amberlite®), or combinations thereof. The net effect is selective removal of asparagine from the food material, leading to the desired acrylamide reduction without adversely reducing finished food product flavor display.

In still another embodiment, a stream of extract is directed to a column that contains an asparagine-specific absorbent containing receptor sites specific for asparagine. The net effect of such a process is selective removal of asparagine from the food material, leading to the desired acrylamide reduction without adversely reducing fmished food product flavor display.

Although various embodiments above have been described in terms of a column procedure, it should be understood that such embodiments can also be practiced in any other suitable mode, such as fluidized bed, industrial scale continuous liquid chromatography (e.g., such as that method described by U.S. Patent No. 4,210,594, issued July 1, 1980 to Logan et al.), or in a batch mode where the absorbent is added to the stream followed by separation of the absorbent from the stream.

Furthermore, although the above embodiments describe batch processes for processing the food material with a dominant bath to remove asparagine, it should be understood that the food material and the solvent can be contacted in a semi-batch or continuous manner (e.g., a counter-current continuous process wherein the food material is pumped in one direction and the solvent is pumped in the opposite direction). In addition, the food material can be the bed in the column through which the solvent is pumped.

5. <u>Heating the food material to form the finished food product</u>

The food material can then be heated in the usual manner, such as by baking, frying, extruding, drying (e.g., via vacuum oven or drum dryer), puffing, or microwaving. In embodiments where enzyme has contacted the food material, deactivating the enzyme may occur through heating, thus the optional deactivation step and the heating (e.g., cooking) step may be carried out simultaneously. Heat processing via cooking can denature and inactivate the enzyme such that the food material is not subjected to continuing enzymatic activity. Furthermore, at least a portion of the time allowed for enzymatic reaction may be carried out during the heating step.

As used herein, "finished food product" includes, but is not limited to, foods ready for consumption and foods to be used as ingredients to prepare other foods.

Preferably, the level of acrylamide in the finished food product is reduced by at least about 10%, preferably at least about 30%, more preferably at least about 50%, still more preferably at least about 70%, and even more preferably at least about 90%.

B. <u>Means of Practicing the Method</u>

The present invention can be practiced by any suitable means. For example, the method herein can be practiced in batch, semi-batch, or continuous mode.

C. <u>Food Products Having Reduced Levels of Acrylamide</u>

The method herein can be applied to the production of any suitable food product, including but not limited to carbohydrate-containing foods, especially low-moisture foods (e.g., less than about 10% moisture), that are heated during preparation. For instance, the method can be used to reduce the level of acrylamide found in mashed potatoes, potato chips, fabricated snack foods, French fries, breakfast cereals, breads, cookies, crackers, toaster pastries, pizza crust, pretzels, hash browns, tater tots, corn tortillas, and taco shells.

In one embodiment, fried fabricated potato crisps have less than about 400 ppb acrylamide, preferably less than about 300 ppb, more preferably less than about 200 ppb, still more preferably less than about 50 ppb, and most preferably less than about 10 ppb.

In another embodiment, fried potato chips have less than about 40 ppb acrylamide, preferably less than about 30 ppb, more preferably less than about 20 ppb, even more preferably less than about 10 ppb, and most preferably less than about 5 ppb.

In yet another embodiment, French fries made from cut potatoes have less than about 40 ppb acrylamide, preferably less than about 30 ppb, more preferably less than about 20 ppb, and most preferably less than about 10 ppb.

In still another embodiment, corn snacks have less than about 75 ppb acrylamide, preferably less than about 50 ppb, and more preferably less than about 10 ppb.

Although the method herein will generally be described in terms of preferred dehydrated potato products, fabricated potato crisps, potato chips, French fries, and corn snacks, it should be understood by one skilled in the art that the method herein can be applied to any suitable food product. Non-limiting examples include crackers, breads (e.g., rye, wheat, oat, potato, white, whole grain products, mixed flours, loaves, twists, buns, rolls, pitas, matzos, focaccia, melba toast, zwieback, croutons, soft pretzels, soft and hard bread sticks, heat and serves), toaster pastries, cookies, danish, croissant, tarts, pie crusts, pastries, muffins, brownies, sheet cakes, donuts, snack foods (e.g., pretzels, tortilla chips, corn chips, potato chips, fabricated snacks, fabricated potato crisps, extruded snacks, extruded filled snacks, trail mix, granola, snack mixes, shoe-string potatoes), flours, mixes (e.g., cake mixes, biscuit mixes, brownie mixes, bread mixes, pancake mixes, crepe mixes, batter mixes, pizza dough), refrigerated doughs (e.g., biscuits, breads, bread sticks, croissants, dinner rolls, pizza dough, cookies, danish, brownies, pie crust), frozen foods (e.g., pie crusts, pies, tarts, turnovers, pizzas, food pockets, cakes, French fries, hash browns, breaded products such as chicken and fish, breaded vegetables), bagels, breakfast cereals, biscuits, French fries, vegetables (e.g., dried, grilled, roasted, broiled, fried, vacuum dried), taco shells, hash browns, mashed potatoes, toast, grilled sandwiches, flour and corn tortillas, crepes, pancakes, waffles, batters, pizza crust, rice, nut-based foods (e.g., peanut butter, foods containing chopped nuts), fruit (e.g., dried, grilled, roasted, broiled, fried, vacuum dried, baked, jellies, pie fillings, flambés, raisins, cranberries, cherries), hush puppies, alcoholic beverages (e.g., beers and ales), products comprising roasted cocoa beans (e.g., dog food, cat food, ferret food, guinea pig food, gerbil food, hamster food, bird food, llama food, ostrich food, emu food, cattle food, deer food, elk food, buffalo food, rabbit food, rat food, mouse food, chicken food, turkey food, pig food, horse food, goat food, sheep food, monkey food, fish food).

1. Dehydrated Potato Products Having Reduced Levels of Asparagine and

Acrylamide

The present invention can be used to make dehydrated potato products having reduced levels of acrylamide by reducing the level of asparagine in the food material. The following sets forth a preferred method of making such dehydrated potato products, but the present invention is not limited to this particular embodiment. Although the embodiment set forth in detail below describes the extraction of asparagine before the cooked potatoes are dried, it should be understood that asparagine extraction can be performed at any suitable stage of any suitable process for making dehydrated potato products. For instance, asparagine extraction can occur before cooking, after cooking, before comminution, after comminution, or during any other suitable processing step before the final dehydrated potato product is formed. The method herein may also be practiced in conjunction with any suitable process for making dehydrated potato products known in the art, such as those set forth in Potato Processing, 4th Ed., Talburt and Smith, Eds., AVI Books, Van Nostrand Reinhold Co., New York, 1987, [hereinafter "Potato Processing"], at pp. 535-646.

In a preferred embodiment, dehydrated potato products, such as potato flakes, flanules, or granules, can be made in accordance with the following method. In general, the method comprises:

(1) providing potatoes;
(2) reducing the particle size of the potatoes;
(3) optionally increasing cell membrane permeability of the potatoes;
(4) cooking the potatoes;
(5) extracting asparagine from the potatoes;
(6) forming a wet mash from the potatoes; and
(7) drying the wet mash to form dehydrated potato products.

It should be understood that although the extraction step is set forth as step (5) in the foregoing embodiment, the extraction step can be carried out at any other suitable step of the method. In another embodiment, the method for making dehydrated potato products comprises:

(1) providing potatoes;
(2) reducing the particle size of the potatoes;
(3) optionally increasing cell membrane permeability of the potatoes;
(4) cooking the potatoes;
(5) forming a wet mash from the potatoes;
(6) drying the wet mash to form dehydrated potato products; and
(7) extracting asparagine from the potatoes, wherein said extracting is carried out before, during, or after any of steps 1-6 above.

It should be understood that steps 1-6 above can be performed in any suitable order.

Any suitable potatoes, such as those used to prepare conventional potato flakes, flanules, or granules, can be used to prepare the dehydrated potato products herein. Preferably, the dehydrated potato products are prepared from potatoes such as, but not limited, to Norchip, Norgold, Russet Burbank, Lady Rosetta, Norkotah, Sebago, Bintje, Aurora, Saturna, Kinnebec, Idaho Russet, Altura, Russet Norkotah, Atlantic, Shepody, Asterix, and Mentor.

Potatoes having less than about 5% reducing sugars (calculated on a dehydrated potato basis), preferably less than about 3%, and more preferably less than about 2%, are preferred. For example, potatoes having low levels of reducing sugars (i.e. <1.5%) are especially preferred for making dehydrated potato products used for making fried potato snacks.

The potatoes are subjected to cooking to soften them for mashing. The potatoes may be peeled, partially peeled, or unpeeled. The potatoes may be whole or may be sliced into pieces of any size before cooking. The cooking procedure can be any thermal or other type of cooking process that softens the potatoes for mashing. For instance, the potatoes may be cooked by submersion in water or steam.

For example, potato slices having an average thickness of about 3/8 inch to about 1/2 inch are typically cooked with steam having a temperature of from about 200˚F (93˚C) to about 250˚F (121˚C) from about 12 to about 45 minutes, more particularly from about 14 to about 18 minutes. Shoestring cut potatoes pieces are typically cooked with steam having a temperature of from about 200˚F (93˚C) to about 250˚F (121˚C) for about 7 to about 18 minutes, more particularly from about 9 to about 12 minutes, to achieve the desired hardness.

The asparagine in the cooked potatoes (e.g., cooked potato slices) can be extracted using water. The cooked slice size can be reduced by various means mentioned above to facilitate the extraction process. The cooked potatoes can be extracted by soaking in water for a predetermined period of time. The extraction period can range from minutes to hours depending on the desired amount of asparagine reduction. Typical extraction time is from about 30 minutes to about 4 hours. After the extraction period, the potatoes are separated from the extraction solution. This can be accomplished by any suitable means (e.g., filtration, centrifugation, or decantation).

After the extraction process, comminution of the extracted potatoes may be accomplished by any suitable means, such as but not limited to ricing, mashing, shredding, or a combination thereof, to form a wet mash.

Optional ingredients can be added and mixed into the wet mash. Such optional ingredients can include starch. Starch can include, but is not limited to, any suitable native or modified starch, including any dried potato products that are added into or back into the mash. Emulsifier can also optionally be added to the wet mash as a processing aid.

After the mash is formed, it can be further dried and processed as described below to form dehydrated potato products. These dehydrated potato products can be in any form, such as but not limited to flakes, flanules, granules, agglomerates, sheets, pieces, bits, flour, or particulates. Alternatively, the wet mash can be used to produce products such as, but not limited to, mashed potatoes, potato patties, potato pancakes, and potato snacks such as extruded French fries, potato sticks, and snack chips. For example, the wet potato mash can be used to produce extruded French fried potato products such as those described in U.S. Patent No. 3,085,020, issued April 9, 1963 to Backinger et al.

Any suitable procedure, such as those known in the art, for producing such dehydrated potato products from a mash may be employed, and any suitable equipment may be used. For example, the mash can be dried to produce flakes according to known processes such as those described in U.S. Patent No. 6,066,353, issued May 23, 2000 to Villagran, et al., as well as those processes described in U.S. Patent Nos. 2,759,832 issued August 19, 1956 to Cording et al., and 2,780,552 issued February 5, 1957 to Willard et al. The mash can be dried to make flanules according to the process set forth in U.S. Patent No. 6,287,622, issued September 11, 2001 to Villagran et al. Granules can be produced by processing the mash according to the process described in U.S. Patent No. 3,917,866, issued November 4, 1975 to Purves et al., or by other known processes such as that described in U.S. Patent No. 2,490,431 issued December 6, 1949 to Greene et al. Suitable dryers can be selected from those well known drying devices including but not limited to fluidized bed dryers, scraped wall heat exchangers, drum dryers, freeze-dryers, air lift dryers, and the like.

Preferred drying methods include those that reduce the amount of total thermal input. For example, freeze drying, drum drying, resonant or pulse flow drying, infrared drying, or a combination thereof is preferred when producing flakes; and air lift drying, fluidized bed drying, or a combination thereof is preferred when producing granules.

Although the dehydrated potato products herein will be primarily described in terms of flakes, it should be readily apparent to one skilled in the art that the potato mash of the present invention can be dehydrated to produce any desired dehydrated potato product that can be derived from a mash.

Drum drying, such as with drum dryers commonly used in the potato product industry, is the preferred method for drying the potato mash to form flakes. The preferred process utilizes a single drum dryer wherein the wet potato mash is spread onto the drum in a thin sheet having a thickness of from about 0.005" to about 0.1", preferably from about 0.005" to about 0.05", more preferably about 0.01 ". Typically, when a drum dryer is used, the mash is fed to the top surface of the drum by a conveying means. Small diameter unheated rolls progressively apply fresh potato mash to portions already on the drum, thus building up a sheet, or layer, having a predetermined thickness. The peripheral speed of the small rolls is the same as that of the drum. After the layer of mash travels around a portion of the circumference of the drum, a doctor knife removes the dried sheet by peeling the dried sheet away from the drum. Typically, the drum dryer itself is heated to temperatures in a range of from about 250˚F (121˚C) to about 375˚F (191˚C), preferably from about 310˚F (154˚C) to about 350˚F (177˚C), and more preferably from about 320˚F (160˚C) to about 333˚F (167˚C) by pressurized steam contained within the drum at pressures of from about 70 psig to about 140 psig. For best results, the rotational speed of the dryer drum and the internal temperature thereof are suitably controlled so as to give a final product having a moisture content of from about 5% to about 14%, preferably from about 5% to about 12%. Typically, a rotational speed (seconds/revolution) of from about 9 sec/rev to about 25 sec/rev, preferably about 11 sec/rev to about 20 sec/rev, is sufficient.

Once the wet mash is sheeted and dried, the resulting dried sheet of flakes can then be broken into smaller sections if desired. These smaller sections can be of any desired size. Any method of breaking the sheet that minimizes starch and potato cell damage, such as fracturing, grinding, breaking, cutting, or pulverizing, can be used. For example, the sheet can be comminuted with an Urschel Comitrol, manufactured by Urschel Laboratories, Inc. of Valparaiso, Indiana, to break up the sheet. Alternatively, the sheet of flakes can be left intact. As used herein, both the intact sheet of flakes and smaller sheet sections are included in the term "potato flakes."

2. Food Products Made from Dihydrated Potato Products Having Reduced Acrylamide and Asparagine Levels

The dehydrated potato products having reduced levels of acrylamide and asparagine can be used to make any suitable food product. An especially preferred use of the dehydrated potato products is in the production of fabricated chips made from a dough. Examples of such fabricated chips include those described in U.S. Patent No. 3,998,975 issued December 21, 1976 to Liepa, U.S. Patent No. 5,464,642 issued November 7, 1995 to Villagran et al., U.S. Patent No. 5,464,643 issued November 7, 1995 to Lodge, and PCT Application No. PCT/US95/07610 published January 25, 1996 as WO 96/01572 by Dawes et al.

The dehydrated potato products can also be rehydrated and used to produce food products such as mashed potatoes, potato patties, potato pancakes, and other potato snacks such as extruded French fries and potato sticks. For example, dehydrated potato products can be used to produce extruded French fried potato products such as those described in U.S. Patent No. 3,085,020, issued April 9, 1963 to Backinger et al., and U.S. Patent No. 3,987,210, issued October 18, 1976 to Cremer. The dehydrated potato products can also be used in breads, gravies, sauces, baby food, or any other suitable food product.

3. Potato Chips Having Reduced Level of Acrylamide

The present invention can be used to make potato chips having reduced levels of acrylamide. The following sets forth a preferred method of making such potato chip products, but the present invention is not limited to this particular embodiment. A typical method for producing potato chips is set forth in Potato Processing, at pp. 371-489.

In a preferred embodiment, the present invention provides a method for reducing the level of acrylamide in potato chips, comprising:

(1) optionally peeling potatoes;
(2) optionally washing potatoes;
(3) slicing potatoes to form potato slices;
(4) optionally rinsing the potato slices;
(5) optionally blanching the potato slices;
(6) extracting the potato slices to reduce asparagine content;
(7) optionally drying the potato slices;
(8) frying the potato slices to form potato chips.

Most preferably, the potato slices are blanched before the asparagine extraction is conducted. Although the foregoing describes asparagine extraction at step (6) above, it should be understood that the extraction may be conducted at any suitable stage of the process. In another embodiment, the method for reducing the level of acrylamide in potato chips comprises:

(1) optionally peeling potatoes;
(2) optionally washing potatoes;
(3) slicing potatoes to form potato slices;
(4) optionally rinsing the potato slices;
(5) optionally blanching the potato slices;
(6) optionally drying the potato slices;
(7) frying the potato slices to form potato chips.
(8) extracting the potato slices to reduce asparagine content, wherein said extracting is carried out before, during, or after any of steps 1-7 above.

It should be understood that steps 1-7 above can be performed in any suitable order.

The extraction step can be accomplished by any suitable means. Preferred means can include soaking, extraction with dominant bath, and rinsing.

In one embodiment, potato slices of a thickness of from about 0.5 to about 1.5 mm are used to make potato chips. The slices are blanched by heating to from about 130˚F to about 170˚F in water for from about 15 seconds to about 3 minutes. The blanched slices can optionally then be cooled. The blanched slices are then extracted by soaking in water for from about 15 minutes to about 4 hours. The extraction can be accomplished in one or more extraction steps. The resulting potato slices have reduced asparagine content. The potato slices are then optionally dried before frying to form potato chips.

Potato chips made according to the method herein can have less than about 40 ppb acrylamide, preferably less than about 30 ppb, more preferably less than about 20 ppb, even more preferably less than about 10 ppb, and most preferably less than about 5 ppb.

4. French Fries

The present invention can be used to make French fries having reduced levels of acrylamide. The following sets forth a preferred method of making such French fries, but the present invention is not limited to this particular embodiment. For example, The asparagine extraction may be conducted at any suitable processing stage of art-recognized methods for making French fries, such as those set forth in Potato Processing, pp. 491-534, or those methods described in U.S. Patent Nos. 6,001,411 and 6,013,296.

In a preferred embodiment, the present invention provides a method for reducing the level of acrylamide in French fries, comprising:

(1) optionally peeling potatoes;
(2) optionally washing potatoes;
(3) cutting potatoes to form potato strips;
(4) optionally rinsing the potato strips;
(5) optionally blanching or optionally par-frying the potato strips;
(6) optionally cooling the potato strips;
(7) extracting the asparagine from the potato strips;
(8) optionally drying the potato strips;
(9) optionally coating the potato strips; and
(10) par-frying the potato strips to form par-fries.

Most preferably, the potato strips are blanched before the asparagine extraction is conducted. Although the foregoing describes asparagine extraction at step (7) above, it should be understood that the extraction may be conducted at any suitable stage of the process. In another embodiment, the method for reducing the level of acrylamide in French fries comprises:

(1) optionally peeling potatoes;
(2) optionally washing potatoes;
(3) cutting potatoes to form potato strips;
(4) optionally rinsing the potato strips;
(5) optionally blanching or optionally par-frying the potato strips;
(6) optionally cooling the potato strips;
(7) optionally drying the potato strips;
(8) optionally coating the potato strips;
(9) par-frying the potato strips to form par-fries; and
(10) extracting the asparagine from the potato strips, wherein said extracting is performed before, during, or after any of steps 1-9 above.

It should be understood that steps 1-9 above can be performed in any suitable order.
The extraction step can be accomplished by any suitable means. Preferred means can include soaking, extraction with dominant bath, and rinsing.
The par-fries can then be frozen, packaged, and stored for later frying to form the final French fries. As used herein, the term "potato strips" is broad enough to include potatoes in any suitable form, such as potato chunks, waffle fries, curly fries, tator tots, hash browns, potato wedges, potato skins, or any other potato portion.
Most preferably, the potato strips are blanched before the asparagine is extracted. If coated French fries are desired, a suitable coating material, such as starch or a blend of materials comprising one or more starches, can be used to coat the potato strips before par-frying.
Finished French fries made from the par-fries of the present invention can have less than about 40 ppb acrylamide, preferably less than about 30 ppb, more preferably less than about 20 ppb, and most preferably less than about 10 ppb.

5. Corn Snacks

In still another embodiment, corn snacks can have less than about 75 ppb acrylamide, preferably less than about 50 ppb, and more preferably less than about 10 ppb. Preferred corn snacks include tortilla chips and corn chips. Although the method herein is generally described in terms of a preferred tortilla chip, it should be understood that the method can be practiced to produce any suitable corn snack.
Tortilla chips are particularly popular consumer snack products. Tortilla chips are traditionally made from whole kernel corn that has been cooked in a hot lime solution for about 5 to about 50 minutes; then steeped overnight. The cooking-steeping process softens the outer hull and partially gelatinizes the starch in the endosperm of the corn. This cooked-steeped corn, called "nixtamal," is then washed to remove the outer hull and ground to form a plastic dough, known as "masa," that contains about 50% moisture. The freshly-ground masa is sheeted, cut into snack pieces, and baked for about 15 to about 30 seconds at a temperature of from about 575°F to about 600°F (302°C to 316°C) to reduce the moisture content to from about 20% to about 35%. The baked snack pieces are then fried in hot oil to form tortilla chips having a moisture content of less than about 3%. See, e.g., U.S. Patent No. 2,905,559, issued November 1, 1958 to Anderson et al., U.S. Patent No. 3,690,895, issued September 12, 1972 to Amadon et al., and Corn: Chemistry and Technology, American Association of Cereal Chemists, Stanley A. Watson, et. al., Ed., pp. 410-420 (1987).

Tortilla chips can also be made from dried masa flour. In typical processes for making such dried masa flour, such as those described in U.S. Patent No. 2,704,257 issued March 1, 1955, to de Sollano et al., and U.S. Patent No. 3,369,908, issued February 20, 1968 to Gonzales et al., the lime-treated corn is ground and dehydrated to a stable form. The dried masa flour can be later rehydrated with water to form a masa dough that is then used to produce tortilla chips, such as those described in WO 01/91581, published December 6, 2001, by Zimmerman et al.

In one embodiment, a corn snack is made by the method comprising:

(1) providing a dough, wherein said dough comprises masa having a reduced level of asparagine;

(2) forming a snack piece from the dough; and

(3) cooking the snack piece to form a corn snack.

In another embodiment, a corn snack is made by the method comprising:

(1) optionally blanching corn;

(2) extracting corn to form asparagine-reduced corn;

(3) producing nixtamal from the corn;

(4) forming a snack piece from the nixtamal; and

(5) cooking the snack piece to form a corn snack.

Corn snacks that can be produced by the method herein include tortilla chips, corn chips, and extruded corn snacks. Suitable cooking methods can include baking, frying, extruding, and combinations thereof.

It should be understood that extraction can be performed at any suitable stage of the process. In one embodiment, the method for making a corn snack comprises:

(1) optionally blanching corn;

(2) producing nixtamal from the corn;

(3) forming a snack piece from the nixtamal;

(4) cooking the snack piece to form a corn snack; and

(5) extracting the corn to form asparagine-reduced corn, wherein said extracting is carried out before, during, or after any of steps 1-4 above.

D. Article of Commerce

Another embodiment of the invention is an article of commerce comprising:

(a) a food product, wherein said food product has a reduced level of acrylamide;
(b) a container for containing the food product; and
(c) a message associated with the container.

The message informs the consumer that the food product contains a reduced level of acrylamide. Suitable messages include, but are not limited to, messages that communicate "reduced" or "low" levels of acrylamide, messages that communicate that less than a specified amount of acrylamide is present (e.g., less than 5 ppb), and messages that communicate that the food product meets or exceeds a suggested or mandatory level (e.g., regulatory threshold or signal level). In one embodiment, the message informs the consumer that the food product is made with an ingredient or ingredients having reduced or low levels of asparagine, thus implying that the food product therefore has reduced or low levels of acrylamide.

In another embodiment, the article of commerce comprises:

(a) a food product, wherein said food product has a reduced level of asparagine;
(b) a container for containing the food product; and
(c) a message associated with the container.

The message informs the consumer that the food product contains a reduced or low level of asparagine.

The message can be printed material attached directly or indirectly to the container, attached directly or indirectly near the container, or alternatively can be a printed, electronic, or broadcast message associated with the container.

Any container from which the food product can be dispensed, presented, displayed, or stored is suitable. Suitable containers include, but are not limited to, bags, canisters, boxes, bowls, plates, tubs, and cans.

## ANALYTICAL METHODS

Parameters used to characterize elements of the present invention are quantified by particular analytical methods. These methods are described in detail as follows.

### 1. Acrylamide

### Method for Measuring Acrylamide (AA) in Food Products

### Summary

Food products are spiked with 1-$^{13}$C-acrylamide ($^{13}$C-AA) and extracted with hot water. The aqueous supernatant is extracted three times with ethyl acetate, and the ethyl acetate extracts are combined and concentrated and analyzed by LC/MS with selected ion monitoring for specific detection of AA and $^{13}$C-AA.

### Extraction of Sample

1. Weigh 6.00 ± 0.01 g of sample into a 125-mL Erlenmeyer flask. Note: Place the sample into a food processor and pulse for 30 seconds so that the particle size is about 1/8 inch or less. If the sample is too small to be effectively ground in a food processor, place the sample in a new plastic bag (e.g., Whirl-Pak™ or equivalent) and pulverize with a rubber mallet until the particle size is 1/8 inch or less.

2. Add 120 μL of 100 ng/μL $^{13}$C-AA in de-ionized distilled water (ISTD 2), with an adjustable 1000-μL pipette (calibrated), directly onto the sample.

3. Using a dispenser, add 40 mL of de-ionized distilled water to the flask and cover with foil.

4. Place into a 65°C water bath for 30 min.

5. With a dispenser, add 10 mL of ethylene dichloride to the flask, and homogenize with a Tekmar Tissumizer™ (SDT-1810) or Ultra-Turrax® (T18 Basic) for 30 seconds, or until uniform. Rinse the probe into the flask with deionized distilled water.

6. Place 25 g of the homogenate into an 8-dram vial

7. Tightly cap the tube and centrifuge for 30 minutes at 2500-5200 RPM.

8. Transfer 8 g of supernatant to another 8-dram vial being careful to avoid solid particles.

9. Add 10 mL of ethyl acetate with a dispenser, cap, and vortex for 10 seconds.

10. Allow any emulsion to break up; help by swirling or shaking once or twice and then allowing layers to split.

11. Transfer as much of the top layer (ethyl acetate) as possible to a scintillation vial, without transferring any liquid (water) from the interface. Extract twice more with 5-mL portions of ethyl acetate and add to the same scintillation vial. Then, add approximately 2 g of anhydrous sodium sulfate.

12. Concentrate the extract with a gentle stream of nitrogen in a 60-65°C water bath to about 1 mL. Transfer the extract to a Pierce REACTI-VIAL™ or equivalent conical-shaped glass vial and further concentrate the extract to a final volume of approximately 100-200 μL. Place this extract into an autosampler vial with a conical sleeve.

# EP 1 562 445 B1

**Preparation of Standards**

**Stock Solutions and Internal Standards**

| Solution | Weight | Volumetric Flask | Solvent | Concentration (ppm) |
|---|---|---|---|---|
| Stock 1 | 0.1000 g Acrylamide (AA) | 100-mL | Ethyl Acetate | 1000 |
| ISTD 1 | 0.0100g $^{13}$C-Acrylamide | 100-mL | Ethyl Acetate | 100 |
| Stock 2 | 0.1000 g Acrylamide (AA) | 100-mL | Deionized Distilled Water | 1000 |
| ISTD 2 | 0.0100g $^{13}$C-Acrylamide | 100-mL | Deionized Distilled Water | 100 |

**Intermediate Standards**

| Solution | Volume Stock 1 AA ($\mu$L) | Volumetric Flask (mL) | Solvent | Concentration (ppm) |
|---|---|---|---|---|
| INT 1 | 100 | 10 | Ethyl Acetate | 10 |
| INT 2 | 1000 | 10 | Ethyl Acetate | 100 |

**Calibration Standards**

| Standard | Volume INT 1 ($\mu$L) | Volume INT 2 ($\mu$L) | Volume ISTD 1 ($\mu$L) | Volumetric Flask (mL) | Solvent | Conc. AA (ppm) | Conc. ISTD 1 (ppm) |
|---|---|---|---|---|---|---|---|
| 0 | 0 | 0 | 450 | 10 | Ethyl Acetate | 0 | 4.50 |
| 0.25 | 250 | 0 | 450 | 10 | Ethyl Acetate | 0.250 | 4.50 |
| 0.75 | 750 | 0 | 450 | 10 | Ethyl Acetate | 0.750 | 4.50 |
| 1.5 | 0 | 150 | 450 | 10 | Ethyl Acetate | 1.50 | 4.50 |
| 3.0 | 0 | 300 | 450 | 10 | Ethyl Acetate | 3.00 | 4.50 |
| 5.0 | 0 | 500 | 450 | 10 | Ethyl Acetate | 5.00 | 4.50 |

**Homogenizer Cleaning Procedure**

Use this cleaning procedure between every sample.

1. Fill a 1-L Erlenmeyer flask with hot tap water ($\approx$80% full) and add a drop of Daw™ dishwashing liquid (available from the Procter & Gamble Co.) or equivalent.

2. Insert the dispersing element probe into the water as far as possible.

3. Homogenize the solution for about 10-15 seconds.

4. Empty the cleaning solution from the Erlenmeyer; rinse and refill the flask with hot tap water.

5. Homogenize again for about 10-15 seconds.

6. Empty the flask and refill with hot tap water; homogenize again for about 10-15 seconds.

7. If the water is not clear and free of particulates, continue homogenizing clean hot tap water as many times as necessary to achieve this condition.

8. When the hot tap water is clear and free of particulates, rinse the probe with deionized distilled water.

Analysis by LC/MS

Samples are analyzed using a Waters 2690 LC interfaced to a Micromass LCZ mass spectrometer.

| Mobile Phase | 100% $H_2O$, 10 mM $NH_4Ac$, adjusted to pH 4.6 w/ formic acid |
|---|---|
| Column | 2.0 mm x 150 mm, YMC C18 AQ (available from Waters Corp.) |
| Flow rate | 0.2 mL/min |
| Interface | Direct (no split) |
| Injection volume | 5 $\mu$L |
| MS ionization mode | Electrospray, positive ion mode |
| MS detection mode | Selected ion monitoring: m/z 72 (AA), m/z 73 ($^{13}$C-AA); dwell times: 0.5 s |

Data Analysis

Response ratios (area of AA peak/area of $^{13}$C-AA peak) are plotted against the corresponding concentration ratios for a series of five standards in ethyl acetate. All standards contain 4.5 $\mu$g/mL $^{13}$C-AA, and AA concentrations ranging from 0 to 5 $\mu$g/mL. Linear regression results in a calibration curve from which concentration ratios in extracts are determined from measured response ratios. When this concentration ratio is multiplied by the accurately known $^{13}$C-AA level (nominally 2 ppm) added to sample in step two of the extraction procedure, the level of AA in ppm results.

Sample Calculation for LC/MS:

The calibration curve is generated by plotting the response ratio (area m/z 72 / area m/z 73) on the y axis vs. the concentration ratio ([AA] /[13C-AA]) on the x-axis. For this example, the equation of that line is y = 0.899x + 0.0123.

Measured area of AA peak (m/z 72) at 4.0 min: 100,000

Measured area of 13C-AA peak (m/z 73) at 4.0 min: 500,000

Response ratio $R_r$ = 0.200. From the slope and intercept of the calibration curve, the concentration ratio $R_c$ is calculated: $R_c$ = (0.200 - 0.0123) / 0.899 = 0.209

Given the spike level of 13C-AA in the sample (2 ppm), the measured level of AA is 0.209 x 2 ppm = 0.418 ppm

**Quality Assurance/Quality Control (QA/QC)**

1. All balances used in the preparation of standards and/or samples, must have their calibrations checked weekly with a set of qualified weights. The balances should be checked with at least three weights covering the range of sample/standard weights to be measured.

2. A six-point calibration curve should be performed daily.

3. A working reference material (WRM) should be analyzed with each set of samples. The concentration of this material should be within 2σ of the running mean. If it is not, the instrument should be recalibrated and the WRM recalculated.

2. Asparagine

Determination of Asparagine and Aspartic Acid in Food and Beverage Products

## PRINCIPLE

A weighed amount of sample is mixed with 5% HCl and heated for 30 minutes, then homogenized. A portion of the homogenate is centrifuged and then a portion of the supernatant is diluted and treated with FMOC reagent (9-fluorenylmethyl chloroformate), which reacts with asparagine and aspartic acid to form a highly fluorescent derivative. Reverse-phase HPLC is then used to resolve FMOC-asparagine from other sample matrix components. Detection is by fluorescence emission at 313 nanometers (nm) upon excitation at 260 nm. Analysis of standards of known concentration permits quantification.

## LINEARITY

Working calibration curve of four standards (50 - 600ppm) give a correlation of 0.998 or better. A curve taken out to 2000ppm also gives a correlation of 0.998.

## ACCURACY

### *Potato products:*

Potato starch is spiked with four levels of both asparagine and aspartic acid (40, 200, 400, and 600 ppm). Recovery of asparagine is 100% (Relative standard deviation of less than 4%) and recovery of aspartic acid is 110% (Relative standard deviation of less than 4%).

## REFERENCES

1. Herbert, P.; Santos, L; Alves, A. Journal of Food Science (2001), 66(9), 1319-1325.
2. Heems, Dany; Luck, Geneviewe; Fraudeau, Chrisophe; Verette, Eric. Journal of Chromatography, A (1998), 798 (1 + 2), 9-17.

## SYSTEM REPEATABILITY

A working reference material of potato chip is run in duplicate over five days. Results are as follows:

|  | ug/g asparagine | ug/g aspartic acid |
|---|---|---|
| **ave** | 7832.07 | 1440.98 |
| **STD** | 625.59 | 195.80 |
| **%RSTD** | 7.99 | 13.59 |

BELOW ARE SUGGESTED CHEMICALS AND EQUIPMENT; HOWEVER, SUBSTITUTIONS OF EQUIVALENT MATERIALS ARE ACCEPTABLE.

### CHEMICALS

| | |
|---|---|
| Water, HPLC or Milli-Q™ Grade (Millipore) | |
| Acetonitrile, HPLC Grade | Burdick & Jackson #AH015-4 |
| Methanol, HPLC Grade | Fisher #A452-4 |
| Ethyl Acetate | Baker #9280-3 |
| Pentane | Burdick & Jackson #GC312-4 |
| Asparagine monohydrate | EM Science |
| Aspartic acid | Sigma #A-8949 |
| aminoisobutyric acid | Sigma #A-8379 |
| 9-Fluorenyl Chloroformate (FMOC) | ICN #150200 |

(continued)

**CHEMICALS**

| | |
|---|---|
| Sodium Borate | EM Science #SX 0355-1 |
| Boric Acid | Fisher #A-73 |
| Sodium Bicarbonate | ICN #194847 |
| Tetramethyl Ammonium Chloride | Fisher #04640-500 |
| Sodium Citrate | MCB #SX445 |
| Citric Acid anhydrous | Baker #0122-01 |
| Acetone | Burdick & Jackson #010-4 |
| Hydrochloric Acid, 0.1N | Fisher #SA48-500 |
| Calcium Chloride Dihydrate | Aldrich #22,350-6 |

**EQUIPMENT**

Transfer Pipettes, polyethylene (Samco #222)
Volumetric Flasks (25, 100, 250, 1000 ml)
Volumetric Pipet (10 ml)
Graduated Cylinders (100-1000ml)
HPLC reservoirs (500 ml, 1 or 2 liter)
Beakers
Magnetic stirrers/stir bars
Analytical (4-place) balance
Scintillation Vials
Centrifuge tubes, screw cap (100x16 mm) with caps
Autosampler vials (8x30 mm, 1 ml), with crimp caps

**Safety:** This method requires the use of a fume hood, and involves exposure to chemicals. Please review Safe Practices for Fume Hood Use and Chemical Spills.

| INSTRUMENT | MODEL | MANUFACTURER |
|---|---|---|
| Robot | Microlab® SPE | Hamilton |
| Pump/HPLC Injector | HP 1100 | Agilent |
| Detector | RF10AXL | Shimadzu |
| Data System | Chemstation | Agilent |

## Column

Phenomenex Luna 100 x 4.6 mm C-18(2) 3 micron # 00D-4251-EO

## PREPARATION OF REAGENTS

*Diluent (pH 8.3-8.5; 1000ml).*

1. Weigh 3.0 grams of **Sodium Borate,** 3.0 grams of **Boric Acid,** and 8.0 grams of **Sodium Bicarbonate** into a dry tared beaker.
2. Place an empty 800 ml beaker on a magnetic stirrer. Add about 500 ml of Milli-Q™ **water** and a stir bar. Stir the water vigorously without splashing.
3. Quantitatively transfer the reagents from step 1 to the water; stir until they are completely dissolved.
4. Quantitatively transfer the solution from step 3 to a 1-liter volumetric flask and dilute to volume with Milli-Q™ **water;** mix well. Stable for up to six (6) months.

*Calcium Chloride Solution (100 grams).*

1. Weigh 40 grams of **Calcium Chloride** Dihydrate into a tared 250 ml beaker.

2. Add 60 grams of Milli-Q™ **water.** Mix well. Store at ambient conditions in a capped glass bottle. Stable for up to 1 year.

*Extraction Solvent* (Pentane: Ethyl Acetate 80:20; 500 ml)

Safety: pentane and ethyl acetate are volatile and flammable. Perform the following operations in a Fume Hood.

1. Transfer 400 ml of **pentane** to a 500 ml HPLC reservoir bottle.
2. Add 100 ml **ethyl acetate**. Mix well. Store capped in/under the Fume Hood.

*Mobile Phase* (Buffer:Methanol:Acetonitrile 60:5:35,pH 3.2, 2 L)

1. Weigh 1.35 grams of **Tetramethyl Ammonium Chloride**, 3.65 grams of **Citric Acid,** and 1.60 grams of Sodium **Citrate** into a dry tared beaker.
2. Place an empty 800 ml beaker on a magnetic stirrer. Add about 500 ml of Milli-Q™ **water** and a stir bar. Stir the water vigorously without splashing.
3. Quantitatively transfer the reagents from step 1 to the water; stir until they are completely dissolved.
4. Quantitatively transfer the solution from step 3 to a 1 liter graduated cylinder and dilute to 1000 ml with Milli-Q™ **water;** mix well.
5. Transfer to a 2-liter HPLC mobile phase reservoir.
6. Add 200 ml Milli-Q™ **water,** 100 ml **methanol** and 700 ml **acetonitrile.** Add the latter two solvents slowly with vigorous stirring. Perform this operation in a hood, and wear personal protective equipment. Refer to the relevant Material Safety Data Sheets (MSDS) for specific details.
7. Degas the mobile phase by vacuum aspiration while stirring.

*FMOC* Reagent Solution (in acetone)

1. Weigh 0.10 grams of **FMOC** reagent into a tared 100 ml volumetric flask.
2. Add **acetone** to dissolve and dilute to volume with same. Mix well. Perform this operation in a hood. Wear PPE specified in the MSDS for the chemicals.
3. Store refrigerated for no more than six (6) months.

**Acid solution** for sample extraction (5% *HCl*)

1. Add 100ml of Milli-Q™ **water** into a 200ml volumetric.
2. Add 4ml of **1N HCl** to volumetric.

Bring to volume with Milli-Q™ **water.**

**PREPARATION OF INTERNAL STANDARD (AMINOISOBUTYRIC ACID)** ISTD A - *Internal Standard Stock A*

1. Weigh 0.5 grams of **aminoisobutyric acid** into a tared 250 ml volumetric
2. Add 25 ml of 1.0N **HCl** and about 100 ml Milli-Q™ **water.** Mix by swirling until dissolved. Dilute to volume with Milli-Q™ water and mix well. Store refrigerated for no more than six (6) months.

**ISTD B -** *Working Internal Standard Solution B* (this solution is added to calibration standards)

1. Pipet 1 ml of Internal Standard Stock A into a 100 ml volumetric flask.
2. Dilute to volume with Milli-Q™ **water.** Stable for one month.

## PREPARATION OF CALIBRATION STANDARD(S)

***Stock*** *Calibration Solution.*

Into a tared 50 ml volumetric, weigh 0.100 g (+/- 0.001 g) **asparagine** and 0.100 g (+/- 0.001 g) **aspartic acid**. Add 25 mL Milli-Q™ **water** and 1 mL **1 N HCI**. Place in sonic bath until dissolved, then bring to volume with Milli-Q™ H2O. Solution is good for 6 month refrigerated.

***Working*** *Standards.*

Prepare the following working calibration standards:

| Std # | mL stock | final volume (mL) | ppm |
|-------|----------|-------------------|-----|
| 1 | 5 | 200 | 50 |
| 2 | 5 | 100 | 100 |
| 3 | 1 | 10 | 200 |
| 4 | 3 | 10 | 600 |

solutions are good for one month refrigerated.

## *PREPARATION OF SAMPLES*

1. Weigh 1 g of sample into 125 ml Erlenmeyer flask.
2. Add 48.0ml of 5% **HCI** solution to each sample.
3. Add 2 ml **ISTD A** to each sample.
4. Cover each flask with aluminum foil and place in 60C water bath for 30 minutes.
5. Add 10 mL dicloroethane to each sample.
6. Homogenize sample for 60 seconds.
7. Pour portion of sample into 30 ml centrifuge tube.
8. Centrifuge at 10000 rpm for 32 minutes at 5°C. The supernatant is used in "Samples - Diluting" step 1.

### Preparation of Standards and Samples

Three Microlab® methods are run in order to dilute the samples/standards, add the internal standard, and form the FMOC derivative. These are summarized below.

| Operation | Microlab method used |
|-----------|----------------------|
| Dilution | TRANSDIL |
| Addition of Internal Standard | ADDISTD |
| Formation of FMOC derivative | ADDFMOC |

## PREPARATION OF SAMPLES AND STANDARDS USING MICROLAB® ROBOT

**Step 1:** Standards - Adding ISTD and Dilution Step

1. Prepare two sets of tubes for each standard. Place approximately 2 mL of standard in one set of tubes, place these filled tubes on the left most position of the Microlab®.
2. Place the rack with empty tubes in the rightmost rack position of the Miorolab®.
3. Fill a 20 ml glass (scintillation) vial with **Working Internal Standard** Solution B and place on the Microlab® workspace.
4. Select method ADDISTD. (Mixes 200 ul ISTD B, 50 ul standard solution, to 4000ul total volume with Milli-Q™ **water**).
5. Execute the method.

6. Remove the tube set from the left position and set aside for discard.

7. Remove the Working Internal Standard Solution from the Microlab® work space and refrigerate.

Set aside right side tubes for step 3.

**Step 2:** Samples - Dilution Step (ISTD was already added during sample preparation)

1. Prepare two sets of tubes for each sample. Place approx. 2 mL of sample in one set of tubes, place these filled tubes on the left most position of the Microlab®.

2. Place the rack with the empty tubes in the rightmost rack position of the Microlab®.

3. Select method TRANSDIL. (Set # of samples, 50ul for amount of sample, and 4000ul for final dilution amount with Milli-Q™ **water**.)

4. Execute the method.

5. Remove the tube set from the left position and set aside for discard.

Set aside right side tubes for step 3.

**Step 3:** Addition of FMOC Reagent - Making Fluorescent derivative

1. Prepare a rack of 100x16 mm screw-cap tubes.

2. Place the rack in the rightmost rack position of the Microlab®.

3. Place standard and sample tubes from above dilution steps in leftmost rack position of Microlab®.

4. Transfer an aliquot (22 mL) **of FMOC reagent** solution to a glass scintillation vial. Add approximately 100 μL of 40% Calcium Chloride solution; mix well. (Calcium chloride is added to make the FMOC reagent "charged" - necessary for detection by Microlab®).

5. Place the vial on the Microlab® workspace.

6. Select method ADDFMOC.

7. Switch syringes 1 & 2 from water to **Diluent** (pH 8.3-8.5).

8. Perform a wash of at least five (5) cycles for syringes 1 & 2 using Diluent (pH 8.3-8.5)

9. Execute method ADDFMOC. (Mixes 450ul of FMOC solution, 250 ul sample from ADDISTD abo to final volume of 1300 ul with diluent solution).

10. Remove the tube set from the SAMPLE rack position and set aside.

11. Remove the FMOC reagent solution from the Microlab® workspace and refrigerate.

13. Remove the tube set from the rightmost position and place in fume hood. Let stand for at least 10 minutes or until solution is clarified (but no longer than 20 minutes).

14. Add 2 ml of **Extraction Solvent** to each tube. Cap and vortex at high speed for two (2) minutes to extract unreacted FMOC reagent.

15. Prepare another tube set of 55x16 mm tubes. Add 1 ml of **mobile phase** solution to each tube.

16. Transfer the 1.0 mL of aqueous (lower) layer from the centrifuge tubes to the 55x16 mm tubes.

17. Discard the upper (organic) layer.

18. Transfer samples to autosampler vials and seal.

## CHROMATOGRAPHY

*Operating Conditions*

HP 1100 with Chem Station software

Detector: Waters 474 Scanning Fluorescence detector

Mode: Norm
Signal: 0.0000
Wavelength: Ex 260
Em 313
Gain: 10

Atten: 1
Response: FST

Column: Phenomex Luna C18 (2) 100 x 4.6 mm 3 u

## LC METHOD

Flow: 1.000 ml/min
Isocratic run (see preparation of reagents - Mobile Phase)
Injection volume: 10.0 ul
Temperature settings: not controlled

## CALCULATIONS

Sample solutions are calculated against a standard curve of known amounts using area counts:

$$y = mx + b$$

y (ratio asparagine/ISTD) = m (slope) x (asparagine concentration) + b (y-intercept)

$$(y - b)/m = x$$

**ppm asparagine** = (area aspargine/area ISTD - intercept)/slope

$$[ppm = ug/mL]$$

*Example:*

$$ppm\ asparagine = (215.45436/551.828 - -0.0165)/0.0023 = 176.93\ ppm$$

*Correction for dilution/homogenization in sample preparation step.*

$$\textbf{ug/g aspargine} = ppm\ aspargine\ found\ X\ \underline{mL\ sample\ dilution\ (50)}$$
$$\underline{\phantom{mL\ sample\ dilution}}\ grams\ of\ sample$$

$$[ppm = ug/mL]$$

*Example:*

$$ug/g \; aspargine = 176.93ppm \; X \; \underline{50mls} = 8773.65 \; ug/g$$
$$1.0083g$$

**RUN ACCEPTABILITY CRITERIA:**

- the Check Sample of Working Reference Material accuracy must be within 10% of known result for asparagine.
- the linearity of the calibration curve ($r^2$) must be 0.995 or greater.

**SAMPLE CHROMATOGRAM OF LC ANALYSIS**

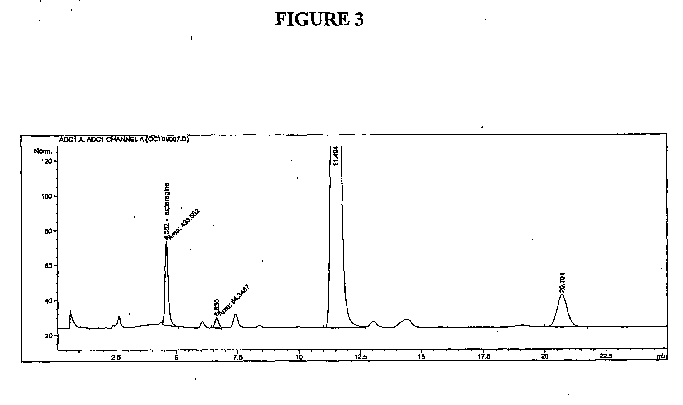

Figure 3 sets forth a sample chromatogram of LC analysis.

| RT | Compound |
|---|---|
| 4.5 min | asparagine |
| 6.6 min | aspartic acid |
| 11.5 min | FMOC reagent |
| 20.7 min | ISTD |

3. % Reduction of Acrylamide

$$\% \; Reduction \; Acrylamide = [(Acrylamide \; level \; in \; control \; sample - Acrylamide \; level \; in \; treated \; sample) \; / \; Acrylamide \; level \; in \; control \; sample] \; x \; 100.$$

The control sample is prepared in exactly the same manner as the treated sample, with the exception that the control sample does not undergo the asparagine removal process.

4. % Reduction of Asparagine

$$\% \; Reduction \; Asparagine = [(Asparagine \; level \; in \; control \; sample - Asparagine \; level \; in \; treated \; sample) \; / \; Asparagine \; level \; in \; control \; sample] \; x \; 100.$$

The control sample is prepared in exactly the same manner as the treated sample, with the exception that the control sample does not undergo the asparagine removal process.

**EXAMPLES**

The following examples are illustrative of the present invention but are not meant to be limiting thereof.

**EXAMPLE 1 - Dehydrated Potato Product with Reduced Acylamide**

Peel and cut Russet potatoes into ¼" inch slabs. Cook until tender in water (~200˚F for 30 minutes). Drain and rinse with water. Prepare mash by forcing the cooked slabs through a wire mesh using a rubber spatula (mesh wires were 1.67mm center-to-center). A portion of this is set aside as the control mash.

Add one pound of mash potato and 3 pounds of water to a Kitchen-Aid® food processor (Model # K45) with wire whisk at Speed=2 for one minute. Filter mixture with a large mesh (1.67mm center-to-center wires). Filter the liquid portion (already filtered) with a fmer mesh (1.11mm center-to-center wires). Combine the two solid fractions. Repeat this first wash five times.

Combine all once-washed fractions together. Repeat the wash process on the once-washed mash to produce a twice-washed mash of ~4.2 lbs.

Dry the twice-washed mash and control mash using a freeze-drier.

The asparagine content (on a dry basis) of the control and the twice-washed mashes are 1.2% and <0.2%, respectively. The asparagine reduction for the process is greater than 84%.

## EXAMPLE 2 - Fabricated Potato Snack Product with Reduced Acylamide

The control and twice-washed dehydrated potato products of Example 1 above are used to make fabricated potato snacks according to the following table:

|  | Control | Twice-Washed |
|---|---|---|
| Control dehydrated potato product | 100g |  |
| Twice-washed dehydrated potato product |  | 100g |
| Emulsifier | 0.6g | 0.6g |
| Water | 50.5g | 50.5g |
| Fry Temp | 375˚F | 375˚F |
| Fry Time | 8 seconds | 8 seconds |

The dried potato product is ground into a flour. The water and emulsifier are combined, then thoroughly admixed with the flour to form a dough. The dough is then sheeted through a mill roll, and oval shaped snack pieces are cut from the sheeted dough. The snack pieces are then fried in hot oil to form fabricated potato snacks.

The moisture and acrylamide contents of the two samples is presented in the following table:

| Finish products | Control | 2X Washed |
|---|---|---|
| Moisture (%) | 1.8 | 1.1 |
| Acrylamide (ppb) | 3219 | 60 |

The acrylamide reduction in the fabricated potato snack using the extraction procedure of Example 1 is greater than 98%.

## EXAMPLE 3 - Potato Chips

Blanched Only: Potato chips having reduced levels of acrylamide can be made using raw potato slices. Peel Atlantic potatoes and slice to ~1.1 mm thickness. Rinse and pad dry. Blanch potato slices in 165˚F water for fifteen seconds. Cool and drain blanched slices. Fry the treated potato slices in a fryer set at 375˚F for 60 seconds. (Example 2A) Two more batches of potato chips are made as above, with the exception that the blanch time is changed to 60 seconds (Example 2B) and 180 seconds (Example 2C).

A control sample is prepared in the same manner used to prepare Examples 2A, B, and C above, with the exception the potato slices are not blanched.

The samples and the controls are analyzed for acrylamide using the method set forth herein.

| Blanched Only | 2A | 2B | 2C |
|---|---|---|---|
| Blanch time (seconds) | 15 | 60 | 180 |
| Acrylamide (ppb) in control sample* | 1079 | 1079 | 1079 |
| Acrylamide (ppb) in blanched samples | 940 | 696 | 679 |

(continued)

| Blanched Only | 2A | 2B | 2C |
|---|---|---|---|
| Percent reduction (%) | 13 | 35 | 37 |
| * Note - only one control sample is produced | | | |

Blanched and Extracted: Potato chips having reduced levels of acrylamide can be made using raw potato slices. Peel Atlantic potatoes and slice to ~1.1 mm thickness. Rinse and pad dry. Blanch potato slices in 165˚F water for fifteen seconds. Cool and drain blanched slices. Extract 100 grams of blanched potato slices by soaking in 250 ml of distilled/deionized for one hour. Agitate sample by swirling for 1 minute every 8 minutes. Heat using a microwave oven (Panasonic microwave, model NN-S5488A) on a setting of high for 2 minutes followed by three 10 second washings with about 800 ml of cool tap water. Fry the treated potato slices in a fryer set at 375˚F for 60 seconds. (Example 2D) Two more batches of potato chips are made as above, with the exception that the blanch time is changed to 60 seconds (Example 2E) and 180 seconds (Example 2F).

A control sample is prepared in the same manner used to prepare Examples 2D, E, and F above, with the exception the potato slices are neither blanched nor extracted.

The samples and the controls are analyzed for acrylamide using the method set forth herein.

| Blanched and Extracted | 2D | 2E | 2F |
|---|---|---|---|
| Blanch time (seconds) | 15 | 60 | 180 |
| Acrylamide (ppb) in control sample* | 1079 | 1079 | 1079 |
| Acrylamide (ppb) in blanched and extracted samples | 281 | 156 | 50 |
| Percent reduction (%) | 74 | 86 | 95 |
| * Note - only one control sample is produced | | | |

Conventional potato chips do not undergo a blanching step. Thus, potato chips having a blanching step are not known in the art. The example above demonstrates that superior results can be obtained by employing the novel combination of blanching and extracting to the potato-chip making process.

## EXAMPLE 4 - French Fries

French fries having reduced levels of acrylamide can be made using raw potato strips. Peel Atlantic potatoes and cut into strips having a cross-sectional area of about 8 mm x 8 mm. Rinse and pad dry. Blanch potato strips in 165˚F water for one minute. Cool and drain blanched strips. Extract 100 grams of blanched potato strips by soaking in 250 ml of distilled/deionized for one hour. Agitate sample by swirling for 1 minute every 8 minutes. Heat using a microwave oven (Panasonic microwave, model NN-S5488A) on a setting of high for 2 minutes followed by three 10 second washings with about 800 ml of cool tap water. Fry the treated potato strips in a fryer set at 375˚F for 3 minutes. (Example 3A) Two more batches of French fries are made as above, with the exception that the blanch time is changed to 3.5 minutes (Example 3B) and 7 minutes (Example 3C).

Control samples are prepared in the same manner used to prepare Examples 3A, B, and C above, with the exception that they are not extracted.

The samples and the controls are analyzed for acrylamide using the method set forth herein.

| | 3A | 3B | 3C |
|---|---|---|---|
| Blanch time (minutes) | 1 | 3.5 | 7 |
| Acrylamide (ppb) in control sample* | 216 | 216 | 216 |
| Acrylamide (ppb) in blanched and extracted samples | 130 | 84 | 5.7 |
| Percent reduction | 40% | 61 % | 97.4% |
| * Note - only one control sample is produced | | | |

### EXAMPLE 5 - Article of Commerce

The potato chips of Example 3 are packaged in a bag for sale to consumers. Printed on the bag is a message stating, "Acrylamide-free product!"

### EXAMPLE 6 - Article of Commerce

The potato chips of Example 3 are packaged in a bag for sale to consumers. Printed on the bag is a message stating, "Low in acrylamide!"

### EXAMPLE 7 - Article of Commerce

The potato chips of Example 3 are packaged in a bag for sale to consumers. Printed on the bag is a message stating, "Acrylamide reduced by over 90%!" A television commercial for the chips communicates the message, "Our chips are lower in acrylamide!"

### EXAMPLE 8 - Article of Commerce

Uniformly-shaped fabricated potato crisps of Example 2 having less than 100 ppb acrylamide are packaged in a cylindrical canister for sale to consumers. A television commercial for the crisps communicates the message, "Acrylamide-reduced!"

### EXAMPLE 9 - Article of Commerce

The French fries of Example 4 are packaged in a paper sleeve having an open end, from which the fries protrude, for sale to consumers. A sign posted inside the retail establish where the French fries are sold reads, "Our fries contain reduced levels of acrylamide!"

### EXAMPLE 10 - Article of Commerce

The French fries of Example 4 are packaged in a paper sleeve having an open end, from which the fries protrude, for sale to consumers. A sign posted inside the retail establish where the French fries are sold reads, "Our fries are low in acrylamide!"

### EXAMPLE 11 - Article of Commerce

The potato chips of Example 3 are packaged in a bag for sale to consumers. Printed on the bag is a message stating, "Made from ingredients low in asparagine!"

### EXAMPLE 12 - Dehydrated Potato Product

Russet baking potatoes are rinsed with water then placed in a pot of boiling water. The potatoes are boiled (submerged) for 1 hour. The boiled potatoes are removed from the water, peeled, then the flesh is mashed. To 15g of the mashed potatoes is added 45g of water and the mixtures is homogenized until uniform and such that no lumps are present.

200 units of glutaminase are added to this homogenized solution and the sample is shaken every five minutes for a total of 30 minutes incubation.

After the 30-minute incubation, the product is microwave (Panasonic microwave, model NN-S5488A) on high for 2-minute increments for a total of 10 minutes until dry (and brown). Compared to dehydrated potatoes prepared by the exact same process but without the enzyme (control sample), the enzyme-treated dehydrated potato product results in greater than a 10% reduction in acrylamide when analyzed for acrylamide using the method set forth herein.

### Claims

1. A method for reducing the level of asparagine in a food material, comprising:

    (1) providing a food material composing asparagine;

(2) reducing the particle size of the food material;
(3) optionally increasing the cellular membrane permeability of the food material; and
(4) extracting the asparagine from the food material.

2.  The method of Claim 1, wherein the cellular membrane of the food material is increased by blanching said food material.

3.  A method for reducing the level of acrylamide in a food product, comprising:

   (1) providing a food material comprising asparagine;
   (2) reducing the particle size of the food material;
   (3) optionally increasing the cellular membrane permeability of the food material;
   (4) extracting a portion of the asparagine from the food material; and
   (5) heating the food material to form the finished food product.

4.  The method of Claim 3, wherein the cellular membrane of the food material is increased by blanching said food material.

5.  An article of commerce comprising:

   (a) snack chips, having a reduced level of acrylamide; wherein said snack chips are obtained according to the method of claim 3 or 4;
   (b) a container for containing the snack chips; and
   (c) a message associated with the container;

   wherein said message associated with the container informs the consumer that the snack chips have a reduced level of acrylamide.

6.  The article of Claim 5, wherein said snack chips are potato chips having less than about 40 ppb acrylamide.

7.  The article of Claim 6, wherein said potato chips have less than about 10 ppb acrylamide.

8.  The article of Claim 5, wherein said snack chips are fabricated potato crisps having less than about 400 ppb acrylamide.

9.  The article of claim 8, wherein said fabricated potato crisps have less than about 200 ppb acrylamide.

10. The article of Claim 5, wherein said snack chips are tortilla chips having less than about 75 ppb acrylamide.

11. The article of claim 10, wherein said tortilla chips have less than about 50 ppb acrylamide.

12. An article of commerce comprising:

   (a) French fries, having a reduced level of acrylamide; wherein said French fries are obtained according to the method of claim 3 a 4;
   (b) a container for containing the French fries; and
   (c) a message associated with the container;

   wherein said message associated with the container informs the consumer that the French fries have a reduced level of acrylamide.

13. The article of Claim 12, wherein said French fries have less than about 40 ppb acrylamide.

14. The article of claim 13, wherein said French fries have less than about 10 ppb acrylamide.

**Patentansprüche**

1.  Verfahren zur Reduzierung des Asparagingehalts in einem Lebensmittelmaterial, umfassend:

    (1) Bereitstellen eines Lebensmittelmaterials, das Asparagin umfasst,
    (2) Reduzieren der Teilchengröße des Lebensmittelmaterials,
    (3) wahlweise Erhöhen der Zellmembrandurchlässigkeit des Lebensmittelmaterials und
    (4) Extrahieren des Asparagins aus dem Lebensmittelmaterial.

2.  Verfahren nach Anspruch 1, wobei die Zellmembran des Lebensmittelmaterials durch Blanchieren des Lebensmittelmaterials vergrößert wird.

3.  Verfahren zur Reduzierung des Acrylamidgehalts in einem Lebensmittelprodukt, umfassend:

    (1) Bereitstellen eines Lebensmittelmaterials, das Asparagin umfasst,
    (2) Reduzieren der Teilchengröße des Lebensmittelmaterials,
    (3) wahlweise Erhöhen der Zellmembrandurchlässigkeit des Lebensmittelmaterials,
    (4) Extrahieren eines Teils des Asparagins aus dem Lebensmittelmaterial und
    (5) Erhitzen des Lebensmittelmaterials, um das fertige Lebensmittelprodukt zu bilden.

4.  Verfahren nach Anspruch 3, wobei die Zellmembran des Lebensmittelmaterials durch Blanchieren des Lebensmittelmaterials vergrößert wird.

5.  Handelsartikel, umfassend:

    (a) Snack-Chips mit reduziertem Acrylamidgehalt, wobei die Snack-Chips gemäß dem Verfahren nach Anspruch 3 oder 4 erhalten werden,
    (b) einen Behälter zur Aufnahme der Snack-Chips und
    (c) eine mit dem Behälter verbundene Mitteilung,

    wobei der Verbraucher durch die mit dem Behälter verbundene Mitteilung darüber informiert wird, dass die Snack-Chips einen reduzierten Acrylamidgehalt besitzen.

6.  Artikel nach Anspruch 5, wobei die Snack-Chips Kartoffelchips mit weniger als etwa 40 ppb Acrylamid sind.

7.  Artikel nach Anspruch 6, wobei die Kartoffelchips weniger als etwa 10 ppb Acrylamid aufweisen.

8.  Artikel nach Anspruch 5, wobei die Snack-Chips hergestellte Kartoffelcrisps mit weniger als etwa 400 ppb Acrylamid sind.

9.  Artikel nach Anspruch 8, wobei die hergestellten Kartoffelcrisps weniger als etwa 200 ppb Acrylamid aufweisen.

10. Artikel nach Anspruch 5, wobei die Snack-Chips Tortillachips mit weniger als etwa 75 ppb Acrylamid sind.

11. Artikel nach Anspruch 10, wobei die Tortillachips weniger als etwa 50 ppb Acrylamid aufweisen.

12. Handelsartikel, umfassend:

    (a) Pommes frites mit reduziertem Acrylamidgehalt, wobei die Pommes frites gemäß dem Verfahren nach Anspruch 3 oder 4 erhalten werden,
    (b) einen Behälter zur Aufnahme der Pommes frites und
    (c) eine mit dem Behälter verbundene Mitteilung,

    wobei der Verbraucher durch die mit dem Behälter verbundene Mitteilung darüber informiert wird, dass die Pommes frites einen reduzierten Acrylamidgehalt besitzen.

13. Artikel nach Anspruch 12, wobei die Pommes frites weniger als etwa 40 ppb Acrylamid aufweisen.

**14.** Artikel nach Anspruch 13, wobei die Pommes frites weniger als etwa 10 ppb Acrylamid aufweisen.

## Revendications

**1.** Procédé pour réduire le taux d'asparagine dans un matériau alimentaire, comprenant :

(1) la fourniture d'un matériau alimentaire comprenant de l'asparagine ;
(2) la réduction de la taille des particules du matériau alimentaire ;
(3) l'augmentation facultative de la perméabilité de la membrane cellulaire du matériau alimentaire ; et
(4) l'extraction de l'asparagine du matériau alimentaire.

**2.** Procédé selon la revendication 1, dans lequel la membrane cellulaire du matériau alimentaire est augmentée par blanchissement dudit matériau alimentaire.

**3.** Procédé pour réduire le taux d'acrylamide dans un produit alimentaire, comprenant :

(1) la fourniture d'un matériau alimentaire comprenant de l'asparagine ;
(2) la réduction de la taille des particules du matériau alimentaire ;
(3) l'augmentation facultative de la perméabilité de la membrane cellulaire du matériau alimentaire ;
(4) l'extraction d'une partie de l'asparagine du matériau alimentaire ; et
(5) un chauffage du produit alimentaire de façon à former le produit alimentaire fini.

**4.** Procédé selon la revendication 3, dans lequel la membrane cellulaire du matériau alimentaire est augmentée par blanchissement dudit matériau alimentaire.

**5.** Article du commerce comprenant :

(a) des amuse-gueules, ayant un taux réduit d'acrylamide ; dans lequel lesdits amuse-gueules sont obtenus selon le procédé selon la revendication 3 ou 4.
(b) un récipient pour contenir les amuse-gueules ; et
(c) un message associé au récipient ;

dans lequel ledit message associé au récipient informe le consommateur que les amuse-gueules ont un taux réduit d'acrylamide.

**6.** Article selon la revendication 5, dans lequel lesdits amuse-gueules sont des chips de pomme de terre ayant moins d'environ 40 parties par milliard d'acrylamide.

**7.** Article selon la revendication 6, dans lequel lesdites chips de pomme de terre ont moins d'environ 10 parties par milliard d'acrylamide.

**8.** Article selon la revendication 5, dans lequel lesdits amuse-gueules sont des croustilles de pomme de terre de transformation ayant moins d'environ 400 parties par milliard d'acrylamide.

**9.** Article selon la revendication 8, dans lequel lesdites croustilles de pomme de terre de transformation ont moins d'environ 200 parties par milliard d'acrylamide.

**10.** Article selon la revendication 5, dans lequel lesdits amuse-gueules sont des chips de tortilla ayant moins d'environ 75 parties par milliard d'acrylamide.

**11.** Article selon la revendication 10, dans lequel lesdites chips de tortilla ont moins d'environ 50 parties par milliard d'acrylamide.

**12.** Article du commerce comprenant :

(a) des frites, ayant un taux réduit d'acrylamide ; dans lequel lesdites frites sont obtenues selon le procédé selon la revendication 3 ou 4.

(b) un récipient pour contenir les frites ; et

(c) un message associé au récipient ;

dans lequel ledit message associé au récipient informe le consommateur que les frites ont un taux réduit d'acrylamide.

13. Article selon la revendication 12, dans lequel lesdites frites ont moins d'environ 40 parties par milliard d'acrylamide.

14. Article selon la revendication 13, dans lequel lesdites frites ont moins d'environ 10 parties par milliard d'acrylamide.

# Figure 1

# Figure 2

asparagine    $H_2O$ →    aspartic acid    +    $NH_3$

asparaginase

ammonia

# FIGURE 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5869297 A
- US 4210594 A, Logan
- US 3085020 A, Backinger
- US 6066353 A, Villagran
- US 2759832 A, Cording
- US 2780552 A, Willard
- US 6287622 B, Villagran
- US 3917866 A, Purves
- US 2490431 A, Greene
- US 3998975 A, Liepa
- US 5464642 A, Villagran
- US 5464643 A, Lodge
- US 9507610 W
- WO 9601572 A, Dawes
- US 3987210 A, Cremer
- US 6001411 A
- US 6013296 A
- US 2905559 A, Anderson
- US 3690895 A, Amadon
- US 2704257 A, de Sollano
- US 3369908 A, Gonzales
- WO 0191581 A, Zimmerman

### Non-patent literature cited in the description

- Potato Processing. AVI Books, Van Nostrand Reinhold Co, 1987, 535-646
- *Potato Processing,* 371-489
- *Potato Processing,* 491-534
- Corn: Chemistry and Technology. American Association of Cereal Chemists, 1987, 410-420
- **Herbert, P. ; Santos, L ; Alves, A.** *Journal of Food Science,* 2001, vol. 66 (9), 1319-1325
- **Heems, Dany ; Luck, Geneviewe ; Fraudeau, Chrisophe ; Verette, Eric.** *Journal of Chromatography,* 1998, vol. 798 (1, 2), 9-17